# FASCICULE DE BREVET EUROPEEN

(11) **EP 3 418 111 B1**
(45) Date de publication et mention de la délivrance du brevet: **01.04.2020**
(21) Numéro de dépôt: 18178785.4
(22) Date de dépôt: 20.06.2018
(51) Int. Cl.: B60N 2/427, B60N 2/24, B60N 2/30, B60N 2/42, B60N 2/70

(54) **SIÈGE POUR VÉHICULE**
FAHRZEUGSITZ
VEHICLE SEAT

(30) Priorité: 22.06.2017 FR 1700672
(43) Date de publication de la demande: 26.12.2018
(73) Titulaire: NEXTER Systems, 42328 Roanne Cedex (FR)
(72) Inventeur: Dressy, Jean-Claude, 18023 Bourges (FR); Lassaigne, Eric, 18023 Bourges (FR)
(74) Mandataire: Cabinet Chaillot

(56) Documents cités:
- EP-A2- 1 593 542
- FR-A1- 2 932 428
- US-A1- 2012 273 649
- US-A1- 2013 169 020

## Description

Le domaine technique de l'invention est celui des sièges à assise pivotante et dossier souple pour l'embarquement de personnels militaires.

Il est connu du brevet FR2932428 un siège comportant une assise pivotante entre une position verticale et une position d'usage horizontale, assise bridée en pivotement par une butée. Cette butée peut être rompue lors d'un choc violent afin de permettre l'affaissement libre de l'assise vers le bas pour ne pas transmettre le choc à un occupant du siège.

Pour le confort de l'occupant d'un tel siège, il est possible de l'équiper d'un dossier souple tel qu'un dossier textile. Un tel type de dossier est décrit par la demande de brevet EP2132057. Il relie une partie haute du siège à un point de fixation situé au niveau de l'assise. L'abaissement de l'assise en position d'usage provoque la tension du dossier fournissant ainsi un supplément de confort.

Un tel dossier ne peut pas être couplé avec un siège selon le brevet FR2932428 car en cas de rupture de la butée le dossier tendu s'oppose à l'affaissement libre de l'assise de manière nuisible à l'occupant.

L'invention propose de résoudre le problème d'entrave à l'affaissement causé par un dossier souple.

En outre, l'invention propose un moyen de tension du dossier favorable à l'accessibilité des parties situées en arrière du siège.

L'invention porte sur un siège pour véhicule comportant une assise pivotable autour d'un axe entre au moins trois positions angulaires, une position repliée sensiblement verticale, une position d'usage où l'assise interfère avec une butée du siège et une position affaissée située plus bas que la position d'usage et obtenue par rupture de la butée consécutivement à un choc, siège caractérisé en ce qu'il comporte un dossier souple destiné à être rendu solidaire avec un point d'accrochage supérieur par sa première extrémité et solidaire de l'assise par sa seconde extrémité au niveau d'un point de fixation, le dossier passant par un point de tension positionné de manière telle que, lorsque l'assise est en position d'usage, le point de tension se trouve aligné avec le point de fixation et l'axe, l'axe étant situé entre le point de tension et le point de fixation, la tension du dossier se trouve ainsi maximale et ne s'oppose pas à l'affaissement de l'assise.

Avantageusement, la solidarisation du dossier avec le point d'accrochage supérieur se fait au moyen d'au moins un crochet.

Avantageusement, le point de tension est situé au voisinage de l'axe.

Avantageusement, le point de tension fait partie d'une chicane dans laquelle serpente le dossier.

L'invention sera mieux comprise à la lecture de la description suivante, description faite à la lumière des dessins figurant en annexe, dessins dans lesquels :
La figure 1 représente une vue latérale d'un siège selon l'invention en position repliée.
La figure 2 représente une vue latérale d'un siège selon l'invention en position d'usage.
La figure 3 représente une vue latérale d'un siège selon l'invention en position affaissée.
La figure 4 représente une vue latérale de détail d'un siège selon l'invention avec l'assise dans différentes positions.
La figure 5 représente une vue latérale d'un siège selon un second mode de réalisation de l'invention en position d'usage.

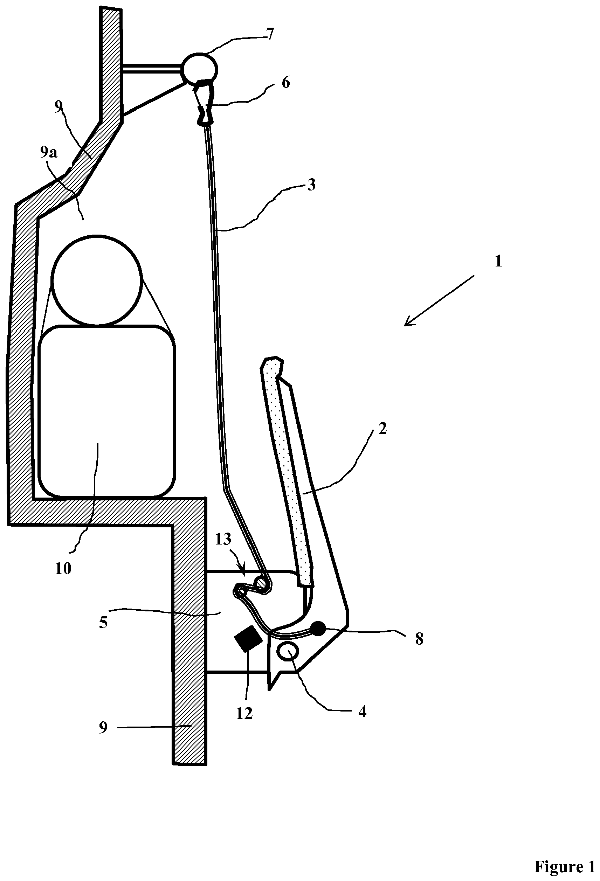

Selon la figure 1, un siège 1 comporte une assise 2 et un dossier 3. L'assise 2 est pivotante relativement au dossier 3 autour d'un axe 4 solidaire d'un bâti 5 du siège 1, bâti 5 solidaire d'une paroi 9 d'un véhicule.

Le dossier 3 est souple et comporte au niveau de sa première extrémité ou extrémité supérieure un moyen d'accrochage 6 le rendant solidarisable d'un point d'accrochage 7 fixé à la paroi 9. Un tel moyen 6 pourra comporter par exemple un crochet 6 apte à correspondre avec un anneau 7 de fixation du siège 1.

La seconde extrémité du dossier est solidaire de l'assise 2 au niveau d'un point de fixation 8. Dans la configuration représentée correspondant à la position repliée, l'assise 2 est sensiblement verticale. Le dossier 3 est détendu ce qui permet à un passager (passager non représenté) de pouvoir décrocher le crochet 6 de la première extrémité du dossier 3 afin d'accéder à toute chose pouvant se trouver derrière celui-ci. Par exemple, le passager pourra accéder à des bagages 10 situés dans un logement 9a formé par une concavité de la paroi 9 du véhicule.

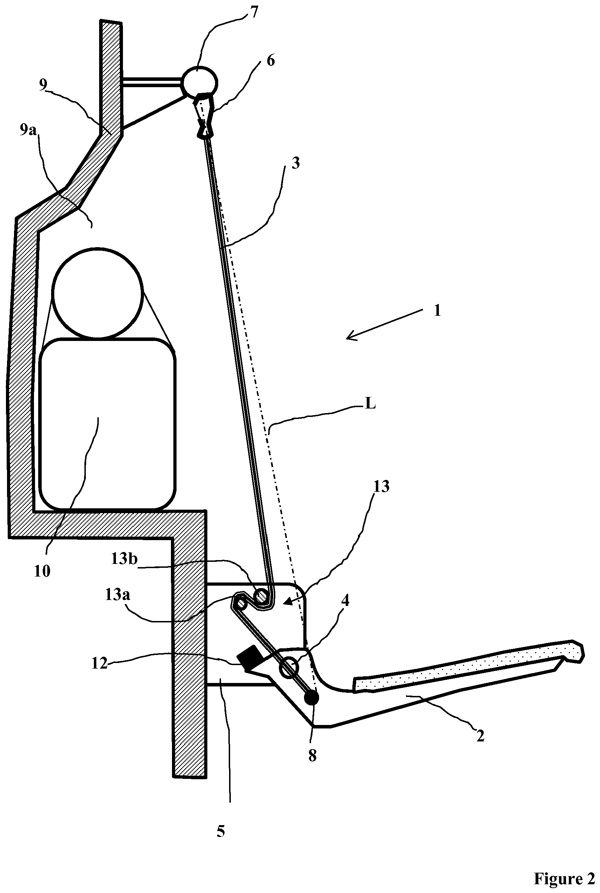

Selon la figure 2, l'assise 2 est abaissée dans une position sensiblement horizontale permettant à un passager (passager non représenté) de s'assoir. Cette position, dite position d'usage, est obtenue par pivotement de l'assise 2 autour de l'axe 4 et relativement au dossier 3 et au bâti 5.

Le pivotement de l'assise 2 est arrêté par interférence de l'assise 2 avec une butée 12. L'abaissement de l'assise 2 a pour effet d'éloigner chacune des extrémités du dossier 3 aboutissant à la tension du dossier 3, ce qui apporte un confort dorsal au passager qui est ainsi tenu à distance des éléments pouvant se trouver derrière le dossier 3.

Le dossier 3 passe par une chicane 13 comportant un premier et un second barreau 13a et 13b entre lesquels il serpente. Cette chicane 13 a pour fonction de dévier le dossier 3 de la ligne droite L reliant chacune des extrémités du dossier 3 afin de donner au dossier 3 une inclinaison appropriée au confort du passager. Le premier barreau 13a de cette chicane 13 forme aussi un point de tension pour le dossier 3. Dans cette position d'usage, le dossier 3 est à sa tension maximale comparativement à sa tension dans les autres positions adoptables par l'assise 2 et selon les conditions que nous allons développer plus loin.

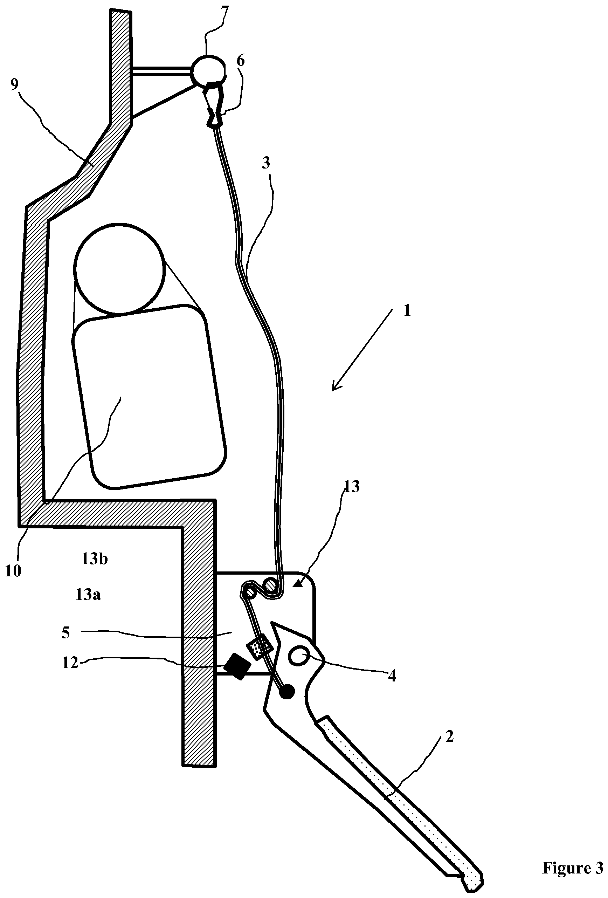

Selon la figure 3, consécutivement à un choc vertical violent du type choc de mine, l'appui de l'assise 2 sur la butée 12 a provoqué la rupture de celle-ci qui est dimensionnée pour rompre au-delà d'un niveau de sollicitation déterminé comme décrit dans le brevet FR2932428.

L'assise 2 est alors libre de pivoter vers le bas, c'est-à-dire de s'affaisser, sous l'effet du poids du passager (passager non représenté) sans que ce passager ne subisse de transmission de sollicitations traumatisantes. En s'affaissant de la sorte, le dossier 3 se détend au fur et à mesure du pivotement vers le bas de l'assise 2. Le dossier 3 ne s'oppose pas à l'affaissement de l'assise 2 puisque la tension de celui-ci diminue au-delà de la position d'usage.

Pour obtenir cet effet technique, l'Homme du Métier agencera le siège 1 de manière à ce qu'en position d'usage, le point de tension constitué par le premier barreau 13a se situe dans l'alignement formé par l'axe 4 et le point de fixation 8. L'axe 4 étant par ailleurs situé entre le point de tension 13a et le point de fixation 8.

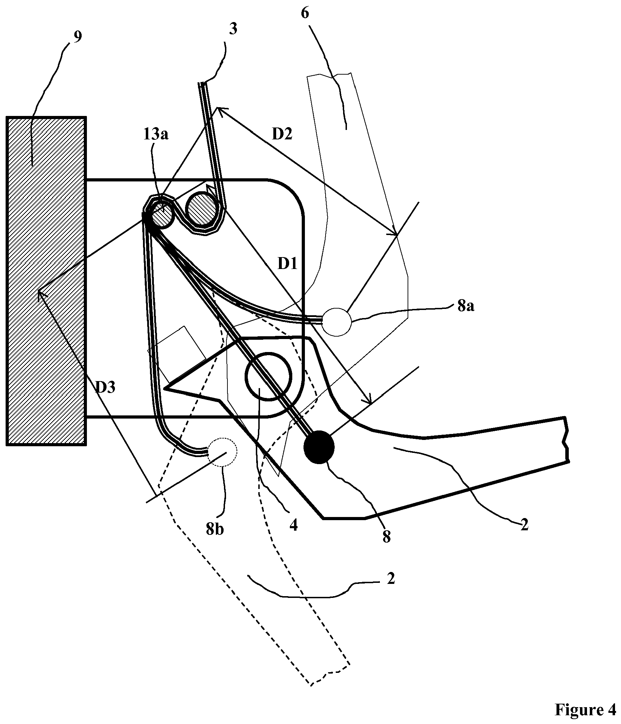

De cette façon, la distance D1 (figure 4) entre le point de fixation 8 et le point de tension 13a est supérieure aux distance D2 et D3 séparant ces deux points dans les positions respectives repliée 8a et affaissée 8b, positions qui sont représentées en trait fin (position repliée) et en pointillés (position affaissée) sur la figure 4.

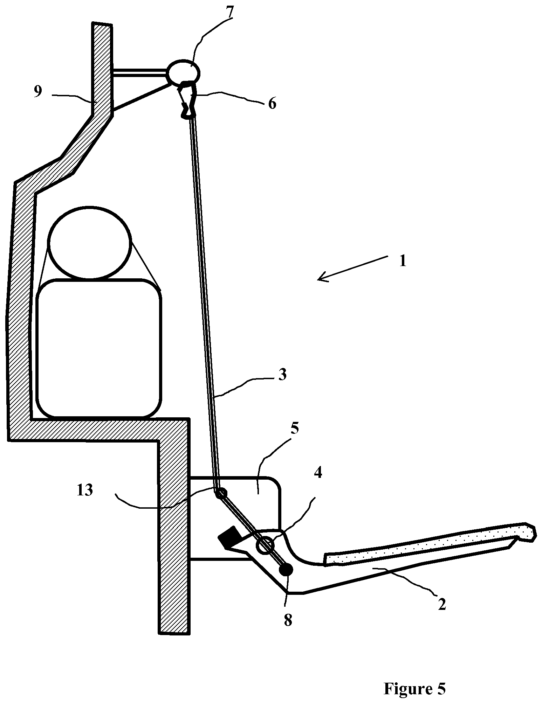

La figure 5 montre un autre mode de réalisation simplifié dans lequel le point de tension 13 est situé au voisinage de l'axe 4 et il est formé par un barreau unique 13 sans chicane.

## Revendications

1. Siège (1) pour véhicule comportant une assise (2) pivotable autour d'un axe (4) entre au moins trois positions angulaires, une position repliée sensiblement verticale, une position d'usage où l'assise (2) interfère avec une butée (12) du siège et une position affaissée située plus bas que la position d'usage et obtenue par rupture de la butée (12) consécutivement à un choc, siège (1) **caractérisé en ce qu'**il comporte un dossier (3) souple destiné à être rendu solidaire avec un point d'accrochage (7) supérieur par sa première extrémité et solidaire de l'assise (2) par sa seconde extrémité au niveau d'un point de fixation (8), le dossier (3) passant par un point de tension (13) positionné de manière telle que, lorsque l'assise (2) est en position d'usage, le point de tension (13,13a) se trouve aligné avec le point de fixation (8) et l'axe (4), l'axe (4) étant situé entre le point de tension (13,13a) et le point de fixation (8), la tension du dossier (3) se trouve ainsi maximale et ne s'oppose pas à l'affaissement de l'assise (2).

2. Siège (1) selon la revendication 1, **caractérisé en ce que** la solidarisation du dossier (3) avec le point d'accrochage supérieur (7) se fait au moyen d'au moins un crochet (6).

3. Siège (1) selon une des revendications 1 ou 2, **caractérisé en ce que** le point de tension (13) est situé au voisinage de l'axe (4).

4. Siège (1) selon une des revendications 1 à 3, **caractérisé en ce que** le point de tension (13a) fait partie d'une chicane (13a,13b) dans laquelle serpente le dossier (3) .

## Patentansprüche

1. Fahrzeugsitz (1), aufweisend eine um eine Achse (4) zwischen mindestens drei Winkelpositionen, einer etwa vertikalen, geklappten Position, einer Nutzungs- oder Sitzposition, in welcher die Sitzfläche (2) mit einem Anschlag (12) des Sitzes interferiert, und einer abgesenkten Position, die sich niedriger als die Nutzungsposition befindet und durch Bruch des Anschlags (12) infolge eines Stoßes erreicht wird, schwenkbare Sitzfläche (2), wobei der Sitz (1) **dadurch gekennzeichnet ist, dass** er eine elastische Rückenlehne (3) aufweist, die bestimmt ist, durch ihr erstes Ende mit einem oberen Verhakungspunkt (7) fest verbunden und durch ihr zweites Ende im Bereich eines Befestigungspunkts (8) mit der Sitzfläche (2) fest verbunden zu sein, wobei die Rückenlehne (3) durch einen Spannungspunkt (13) verläuft, der derart positioniert ist, dass, wenn die Sitzfläche (2) in der Nutzungsposition ist, sich der Spannungspunkt (13, 13a) in einer Flucht mit dem Befestigungspunkt (8) und der Achse (4) befindet, wobei sich die Achse (4) zwischen dem Spannungspunkt (13, 13a) und dem Befestigungspunkt (8) befindet, wobei die Spannung der Rückenlehne (3) somit maximal ist und dem Absinken der Sitzfläche (2) nicht entgegenwirkt.

2. Sitz (1) nach Anspruch 1, **dadurch gekennzeichnet, dass** die feste Verbindung der Rückenlehne (3) mit dem oberen Verhakungspunkt (7) mit Hilfe von mindestens einem Haken (6) erfolgt.

3. Sitz (1) nach einem der Ansprüche 1 oder 2, **dadurch gekennzeichnet, dass** sich der Spannungspunkt (13) in der Nähe der Achse (4) befindet.

4. Sitz (1) nach einem der Ansprüche 1 bis 3, **dadurch gekennzeichnet, dass** der Spannungspunkt (13a) Teil eines Hindernisses (13a, 13b) ist, in welchem sich die Rückenlehne (3) schlängelt.

## Claims

1. A seat (1) for vehicle, including a seat part (2) pivotable around a pin (4) between at least three angular positions, a substantially folded vertical position, a usage position in which the seat part (2) interferes with a stop (12) of the seat, and a collapsed position located lower than the usage position and obtained by breaking the stop (12) following an impact, wherein the seat (1) is **characterised in that** it includes a flexible seatback (3) intended to be secured with an upper attachment point (7) by its first end and secured to the seat part (2) by its second end at a fastening point (8), the seatback (3) passing through a tension point (13) positioned such that, when the seat part (2) is in the usage position, the tension point (13, 13a) is aligned with the fastening point (8) and the pin (4), the pin (4) being located between the tension point (13, 13a) and the fastening point (8), the tension of the seatback (3) being thus maximal and does not oppose the collapse of the seat part (2).

2. The seat (1) according to claim 1, **characterised in that** the securing of the seatback (3) with the upper attachment point (7) is done using at least one hook (6).

3. The seat (1) according to one of claims 1 or 2, **characterised in that** the tension point (13) is located near the pin (4).

4. The seat (1) according to one of claims 1 to 3, **characterised in that** the tension point (13a) is part of a baffle (13a, 13b) in which the seatback (3) winds.
